# EUROPÄISCHE PATENTSCHRIFT

(11) **EP 3 447 284 B1**
(45) Veröffentlichungstag und Bekanntmachung des Hinweises auf die Patenterteilung: **29.03.2023**
(21) Anmeldenummer: 17187658.4
(22) Anmeldetag: 24.08.2017
(51) Int. Cl.: F03D 80/40

(54) **ROTORBLATT FÜR EINE WINDENERGIEANLAGE, VERFAHREN ZUM KONTAKTIEREN EINER ELEKTRISCH LEITFÄHIGEN BESCHICHTUNG AUF EIN ROTORBLATT EINER WINDENERGIEANLAGE UND WINDENERGIEANLAGE**
ROTOR BLADE FOR A WIND TURBINE, METHOD FOR CONTACTING AN ELECTRICALLY CONDUCTIVE COATING ON A WIND TURBINE ROTOR BLADE AND WIND TURBINE
PALE DE ROTOR D'UNE ÉOLIENNE, PROCÉDÉ DE MISE EN CONTACT D'UN REVÊTEMENT ÉLECTRIQUEMENT CONDUCTEUR SUR UNE PALE DE ROTOR D'UNE ÉOLIENNE ET ÉOLIENNE

(43) Veröffentlichungstag der Anmeldung: 27.02.2019
(73) Patentinhaber: eno energy systems GmbH, 18055 Rostock (DE)
(72) Erfinder: Bockholt, Stefan, 18255 Kühlungsborn (DE); Porm, Karsten, 18236 Kröpelin (DE)
(74) Vertreter: 2SPL Patentanwälte PartG mbB

(56) Entgegenhaltungen:
- EP-A1- 2 526 292
- GB-A- 2 319 942
- US-A1- 2013 136 598
- US-B1- 6 612 810
- Javier Martínez ET AL: "Harsh-Environment-Resistant OH-Vibrations-Sensitive Mid-Infrared Water-Ice Photonic Sensor", Advanced Materials Technologies, 1. August 2017 (2017-08-01), XP055456205, DOI: 10.1002/admt.201700085 Gefunden im Internet: URL:http://winterwind.se/wp-content/upload s/2016/02/3_2_3_Rehfeld_Assessment_of_de-i cing_and_anti-icing_technologies_in_ice_wi nd_tunnel.pdf

## Beschreibung

### Technisches Gebiet

Ausführungsbeispiele der vorliegenden Erfindung befassen sich mit der elektrischen Kontaktierung einer elektrisch leitfähigen Beschichtung eines Rotorblattes einer Windenergieanlage.

### Hintergrund

Windkraftanlagen oder Windenergieanlagen (WEA) zur Energiegewinnung aus erneuerbaren Energiequellen sind Bestandteil einer nachhaltigen Energieversorgung. In Abhängigkeit von den Anforderungen an die Energiegewinnung und den vorhandenen klimatischen Bedingungen werden WEA kontinuierlich und unter wechselnden klimatischen Bedingungen betrieben. Insbesondere bei wechselnden klimatischen Bedingungen und bei Außentemperaturen unterhalb des Gefrierpunktes kann es zu einer Eisbildung auf den Rotorblättern einer WEA kommen. Die Eisbildung auf den Rotorblättern erhöht das Rotorblattgewicht und beeinflusst die Aerodynamik, wodurch sich der Energieertrag einer WEA reduziert und die Wirtschaftlichkeit abnimmt. Aus diesem Grund bedarf es einer Rotorblattheizung oder einer Rotorblattflächenenteisung um einen sicheren und störungsfreien Betrieb einer WEA zu gewährleisten. Zur Rotorblattflächenenteisung können Enteisungssysteme und Rotorblattheizungen verwenden werden, welche das Eis von der Rotorblattoberfläche lösen oder ein Entstehen von Eis auf der Rotorblattoberfläche unterbinden. Abhängig von der Größe des Rotorblattes müssen Enteisungssysteme entsprechend große Flächen eisfrei halten. Um große Flächen eisfrei zu halten, bedarf es bei elektrisch ausgeführten Enteisungssystemen und Rotorblattheizungen hoher elektrischer Leistungen.

Aus der Druckschrift WO 03/058063 A1 ist eine Rotorblattheizung aus einem elektrisch leitenden Material bekannt, welche an einem Rotorblatt einer WEA angebracht ist. Ferner sind aus der Druckschrift DE 197 48 716 C1 eine Rotorblatt-Heizung und ein Blitzableiter in Form eines gewickelten Heizdrahts bekannt. Aus der Druckschrift US 2015/0023792 A1 ist ein Enteisungssystem für eine WEA bekannt, welches aus einem Heizelement besteht. Aus der Druckschrift DE 200 14 238 U1 ist ein Heizsystem für Rotorblätter in einer WEA bekannt, bei dem Wärme über einen im Rotorblatt zirkulierenden Luftstrom an die Rotorblätter übertragen wird. Die Druckschrift EP 2 526 292 A1 beschreibt die Anbringung einer Heizmatte auf einem Rotorblatt einer Windenergieanlage.

Bei großen elektrischen Lasten, die für elektrisch betriebene Heizungssysteme in WEA mit großen Rotorflächen regelmäßig erforderliche sind, bedarf es einer Vorrichtung zur elektrischen Kontaktierung der Rotorblattheizung, die den erforderlichen Kontakt zuverlässig und ohne zu altem herstellen kann. Zusätzlich bedarf es aufgrund der Aerostruktur eines Rotorblattes einer möglichst kompakten Kontaktierung einer leitfähigen Beschichtung, die als Rotorblattheizung verwendet werden kann, wobei die Kontaktierung trotz der geforderten Kompaktheit hohe Ströme leiten können soll.

### Zusammenfassung

Die Erfindung wird durch den Gegenstand der beigefügten Ansprüche definiert.

Bei Ausführungsbeispielen der vorliegenden Erfindung handelt es sich um ein Rotorblatt für eine WEA, umfassend eine elektrisch leitfähige Beschichtung, die als Rotorblattheizung verwendet werden kann, und einen mit der Beschichtung elektrisch leitfähig verbundenen Flächenkontakt, der ausgebildet ist, einen elektrischen Strom an die elektrisch leitfähige Beschichtung zu leiten.

Eisbildung führt an Rotorblättern temporär zu negativen Veränderung des Profilverlaufes. Aufgrund der aerodynamischen Prinzipien sollte von dem vorgegebenen Profilverlauf eines Rotorblattes in einer WEA nicht abgewichen werden. Aus diesem Grund sollte eine Eisbildung auf Rotorblättern verhindert werden. Mittels einer Rotorblattheizung als elektrisch leitfähige Beschichtung mit einem möglichst dünnen Auftrag auf das Rotorblatt kann die Eisbildung unter Einhaltung des Profilverlaufs verhindert werden. Unter Verwendung eines elektrischen Flächenkontakts können hohen Stromlasten, welche bei punktuellen Kontakten zur Zerstörung der Beschichtung in Form eines Wegbrennens führen würden, vermieden werden. Ferner wird bauartbedingt eine flache Oberfläche der Kontaktierung geschaffen, wodurch vom Profilverlauf des Rotorblattes für die Kontaktierung der elektrisch leitfähigen Beschichtung in einer WEA nicht abgewichen werden muss.

Zusätzlich zu der an den Profilverlauf des Rotorblattes angepassten Kontaktierung, kann der Flächenkontakt in Folge einer großflächigen Kontaktierung die Leistungsfähigkeit einer vorhandenen Rotorblattheizung aufgrund seiner höheren Stromleiteigenschaften erweitern.

Des Weiteren kann sich ein elektrischer Flächenkontakt in Form eines elektrisch leitfähigen Geflechts an die dynamischen und statischen mechanischen Lasten in einer Rotorblattstruktur anpassen. Hierbei kann das Geflecht aufgrund der flexiblen Eigenschaften eines Geflechts beispielsweise auch dehnbar und deformierbar sein. Daher kann von einem lebensdauerfesten Verbund zwischen der elektrisch leitfähigen Beschichtung und dem elektrisch leitfähigen Geflecht ausgegangen werden, weil aufgrund der Flexibilität des Geflechtes potenziell eine geringe Reibung in einer Verbundstruktur herrscht.

Bei weiteren Ausführungsbeispielen handelt es sich um ein Verfahren zum Anbringen einer elektrisch leitfähigen Beschichtung auf ein Rotorblatt in einer WEA, umfassend das Anbringen eines elektrischen Flächenkontakts an ein Rotorblatt und das Auftragen der elektrisch leitfähigen Beschichtung auf den elektrischen Flächenkontakt und auf das Rotorblatt.

Der mit einer elektrisch leitenden Beschichtung verbundene Flächenkontakt kann entsprechend des Aeroprofils aufgrund seiner flexiblen Struktur an die Rotorblattgeometrie angepasst werden. Der Flächenkontakt ermöglicht eine große elektrisch leitfähige Oberfläche bei gleichzeitig flacher Bauart, wodurch ein hoher Strom an die elektrisch leitfähige Beschichtung der Heizung übertragen werden kann. Aufgrund der variabel anzupassenden Größe der Oberfläche als Heizung kann das Verfahren für unterschiedlich große WEA skaliert werden, wodurch ein flexibler Einsatz des Auftragungsverfahrens gewährleistet ist. Durch die Skalierung der Oberfläche als Heizung, kann die Rotorblattheizung auch entsprechend der vorherrschenden klimatischen Bedingungen an die WEA angepasst werden. Bei einer Auslegung der Rotorblattheizung für hohen Heizleistungen mit einem entsprechend großen Stromeintrag in die elektrisch leitende Beschichtung, kann für eine Rotorblattoberfläche durch eine große Überlappung zwischen der elektrisch leitenden Beschichtung und dem Flächenkontakt eine elektrisch leitfähige Beschichtung mit hoher Heizleistung realisiert werden. Umgekehrt, kann bei einer Auslegung der Rotorblattheizung für kleine Heizleistungen die elektrisch leitfähige Oberfläche durch eine kleine Überlappung kleiner dimensioniert werden, wodurch die Vorrichtung zum Heizen einer Rotorblattoberfläche in einer WEA leichter ausgeführt und schneller angebracht werden kann.

Ferner ermöglicht das Auftragen der leitenden Beschichtung mittels einer Rolle oder unter Verwendung eines Sprühverfahrens ein nachträgliches Anbringen und Kontaktieren der Rotorblattheizung in einer WEA. Somit können WEA mit einer Rotorblattheizung nachgerüstet werden, oder die Leistungsfähigkeit vorhandene Rotorblattheizungen durch ein Auftragen und Kontaktieren einer zusätzlichen leitenden Beschichtung in der Leistungsfähigkeit verstärkt werden.

### Figurenkurzbeschreibung

Ausführungsbeispiele werden nachfolgend bezugnehmend auf die beiliegenden Figuren näher erläutert. Es zeigen:
- Fig. 1: eine schematische Darstellung einer Querschnittsfläche eines Rotorblattes;
- Fig. 2: eine schematische Darstellung einer Querschnittsfläche eines Rotorblattes mit einem Flächenkontakt angebunden an eine leitfähige Beschichtung;
- Fig. 3: eine schematische Darstellung eines elektrischen Ersatzschaltbildes einer Rotorblattheizung;
- Fig. 4: eine schematische Darstellung eines Rotorblatts in isometrischer Ansicht;
- Fig. 5: eine schematische Darstellung einer Rotorblattheizung mit zwei elektrischen Flächenkontakten; und
- Fig. 6: ein Fließdiagramm eines Verfahren zum Anbringen eines elektrischen Flächenkontakts;

### Beschreibung

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas Anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts Anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

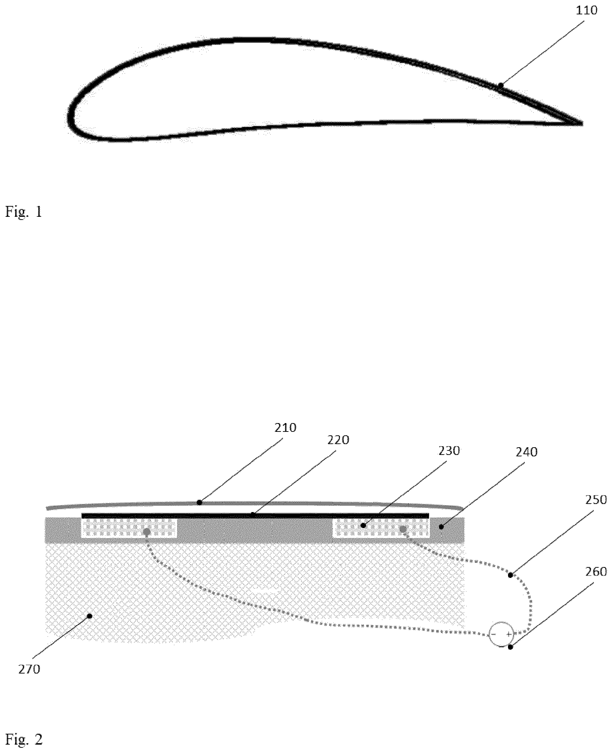

**Fig. 1** zeigt eine schematische Darstellung einer Querschnittsfläche eines Rotorblattes 110.

Die Formgebung und Kontur eines Rotorblattes 110 folgt speziellen aerodynamischen Formen und resultiert in einem Aeroprofil zur Wandlung der im Wind enthaltenen kinetischen Energie zumeist in eine rotierende Bewegung. Damit das aerodynamische Prinzip optimal genutzt werden kann, sollte von dem vorgegebenen Profilverlauf im Betrieb einer WEA nicht abgewichen werden. Eisbildung auf dem Rotorblatt 110 führt aufgrund des festen Aggregatzustandes von Eis zu einer negativen Veränderung des Aeroprofils und einer ungewollten Masse am Rotorblatt 110, weshalb von Leistungseinbußen im Betrieb von WEA auszugehen ist. Ferner können aufgrund des sich ändernden Aggregatzustandes von Eis unter wechselnden klimatischen Bedingungen und unter den vorherrschenden Fliehkräften aus der rotierenden Bewegung des Rotorblattes 110 Eismassen von einer WEA unkontrolliert herabfallen. Es ist somit technisch und wirtschaftlich sinnvoll eine Eisbildung an Rotorblättern in einer WEA zu vermeiden. Enteisungssysteme und Rotorblattheizungen können Eis von der Rotorblattoberfläche kontrolliert lösen oder ein Entstehen von Eis auf der Rotorblattoberfläche gänzlich unterbinden.

Um eine Eisbildung an Rotorblättern einer WEA zu unterbinden, kann beispielsweise die Oberfläche des Rotorblattes 110 über den Gefrierpunkt von Eis erwärmt werden, wodurch einer Eisbildung auf dem Rotorblatt 110 entgegengewirkt wird. Hierbei bedarf es einerseits eines relativ hohen Wärmeeintrags in das Rotorblatt 110 um eine Fläche entsprechend der Rotorblattlänge eisfrei zu halten, und andererseits einer kompakten Bauform einer dazu verwendeten Enteisungseinrichtung um das Aeroprofil eines Rotorblattes 110 nicht zu beeinflussen. Einige Enteisungseinrichtungen verwenden Heizwiderstände und wandeln damit elektrische Energie in thermische Energie. Heizwiderstände sind somit eine Sonderform des elektrischen Widerstandes. Der elektrische Heizwiderstand kann leistungsstark und flach ausgeführt werden und erzeugt Wärme gemäß dem Stromwärmegesetz beziehungsweise der Jouleschen Erwärmung, wodurch eine Umformung von elektrischer Energie in Wärmeenergie lokal vollzogen wird. Wenn ein Heizwiderstand in Form einer elektrisch leitfähigen Beschichtung auf einem Rotorblatt 110 ausgeführt ist, kann der elektrische Widerstand die Erzeugung eines Wärmeeintrags an der Oberfläche des Rotorblattes 110 bewirken. Sobald sich die Temperatur der leitfähigen Beschichtung in Folge eines Stromeintrags erhöht, erhöht sich auch die Temperatur an der Rotorblattoberfläche. Erhöht sich die Temperatur am Rotorblatt 110 auf über den Gefrierpunkt, kann von einem wirkungsvollen Lösen von Eis an der Rotorblattoberfläche oder von einem Unterbinden von einer Eisbildung an der Rotorblattoberfläche ausgegangen werden.

Ausführungsbeispiele der vorliegenden Erfindung umfassen eine elektrisch leitfähige Beschichtung, welche das Aeroprofil des Rotorblattes 110 aufnimmt und in Form eines elektrischen Heizwiderstandes oder einer Rotorblattheizung die Umgebungstemperatur am Rotorblatt 110 durch Joulesche Erwärmung über dem Gefrierpunkt aufrechterhält. Vorzugsweise besteht die elektrisch leitfähige Beschichtung aus einem elektrisch leitfähigem Polymer und/oder einem elektrisch leitfähigen Polymer in Verbindung mit einem elektrisch nicht leitfähigen Polymer. Diese Beschichtung kann auch als elektrisch leitfähiger Lack beschrieben werden, welcher eine hohe Viskosität bei der Verarbeitung aufweisen kann. Der Lack kann beispielsweise mittels eines Pinsels, einer Rolle oder eines Sprühverfahrens auf der Rotorblattoberfläche aufgetragen werden. Aufgrund der auftragenden Verarbeitung der elektrisch leitfähigen Beschichtung kann diese während der Herstellung des Rotorblatts oder nachträglich aufgetragen werden. Ferner kann die elektrisch leitfähige Beschichtung dosiert oder kontrolliert aufgetragen werden, wodurch sich der elektrische Widerstand und somit die Auslegung der Heizleistung einstellen lässt. Weitere Ausführungsbeispiele der elektrisch leitfähigen Beschichtung sind elektrisch leitenden Folien, leitfähige Metall-Kunststoff Verbindungen oder zum Beispiel Carbonfasern.

Entsprechend des Ohm'schen Gesetzes kann die Temperaturerhöhung in Folge des Wärmeeintrages durch die elektrisch leitfähige Beschichtung anhand der eingeführten Stromstärke in Verbindung mit der anliegenden Stromspannung und des effektiven elektrischen Widerstandes beschrieben werden. Hierbei können beispielsweise Schichtwiderstände zwischen 10 und 2000 Ohm/cm vorgesehen sein. Entsprechend der Dimensionierung des Rotorblatts 110 und den vorherrschenden klimatischen Bedingungen, kann eine elektrisch leitfähige Beschichtung 220 mit einem kleinen Schichtwiderstand zwischen 10 Ohm/cm und 500 Ohm/cm vorgesehen sein, um das Lösen von Eis durch einen ausreichenden Wärmeeintrag zu erzeugen. Für besonders hohe Wärmeeinträge in das Rotorblatt 110 können Schichtwiderstände zwischen 500 Ohm/cm und 2000 Ohm/cm vorgesehen sein. Aufgrund des linearen Zusammenhangs zwischen der elektrischen Leistung, des eingeführten elektrischen Stroms und der anliegenden Stromspannung kann bei dem hier dargestellten Ausführungsbeispiel von einer in Größe und Heizleistung skalierbaren Rotorblattheizung ausgegangen werden.

Die als Heizwiderstand oder Rotorblattheizung ausgeführte elektrisch leitfähige Beschichtung wird mittels einer externen Stromquelle betrieben. Während des Betriebes der Heizung unter Verwendung der Stromquelle kann die elektrisch leitende Beschichtung beispielsweise Stromeinträge zwischen 2 Ampere und 125 Ampere aufnehmen und in Wärme umwandeln. Bei der Dimensionierung der Rotorblattheizung kann der Stromeintrag bei 15 Ampere limitiert sein, um eine elektrisch kleiner ausgelegte Beschichtung zu verwenden. Für größer dimensionierte Rotorblattheizung können Stromeinträge von bis zu 125 Ampere möglich sein. Ferner könnte die Rotorblattheizung für eine variabel angelegte Kleinspannung zwischen 10 und 240 Volt oder für eine Niederspannung von bis zu 1000 Volt ausgelegt werden, um die Rotorblattheizung während des Betriebs entsprechend der Eisbedingungen variabel und stufenlos zu steuern.

**Fig. 2** zeigt eine schematische Darstellung eines Ausführungsbeispiels der Erfindung im Querschnitt. Der Querschnitt zeigt eine elektrische leitende Beschichtung 220 und einen Flächenkontakts 230 an der Oberfläche eines Rotorblatts 110. Die Kontaktierung der Beschichtung 220 an die Stromquelle 260 wird entsprechend des benötigten Stromeintrags und der angelegten Spannung an zwei gegenüberliegenden Enden der Beschichtung 220 mittels eines Flächenkontakts 230 ausgeführt.

Der Flächenkontakt 230 ist auf eine mehrschichtige Struktur, überwiegend aus einem Verbund von Glasfaserlagen 270 und Kohlefaserlaminaten (englisch: carbon fiber roving), auf dem Rotorblatt 110 angebracht und mit dem Rotorblatt 110 verbunden. Die aus einem Hartlack 240 (englisch: gelcoat) 240 bestehende Decksicht einer Rotorblattes 110 dient hierbei als Rotorblattoberfläche. Der Flächenkontakt 230 befindet sich in einem Graben im Hartlack 240 und ist bündig mit der Oberfläche des Rotorblatts abgeschlossen. Dies hat zur Folge, dass das Aeroprofil des Rotorblattes nicht von dem lokal eingeführten Flächenkontant beeinflusst wird, wodurch die aerodynamische Struktur des Rotorblattes 110 nicht durch den Flächenkontakt gestört wird.

Der in eine Oberfläche eines Rotorblatts 110 angebrachte Flächenkontakt 230 in Verbindung mit der elektrisch leitfähigen Beschichtung 220 ist potentiell Witterungseinflüssen ausgesetzt. Um die als Rotorblattheizung ausgeführte elektrische leitfähige Beschichtung 220 dauerhaft vor Witterungseinflüssen zu schützen, kann eine Deckschicht 210 auf die Beschichtung 220 aufgetragen werden. Fernen kann die Farbe der Decksicht 210 von dem Farbton der leitfähigen Beschichtung 220 abweichen und entsprechend den Anforderungen an WEA angepasst werden.

Während des Betriebs einer WEA können Zug-, Druck- und Torsionsbeanspruchungen zu Spannungen an der Oberfläche eines Rotorblatts 110 führen. Der lokal eingeführten Flächenkontant 230 ist hierbei eine Einheit mit dem Aeroprofil, so dass die oben genannten Spannungen auf den Flächenkontakt übertragen werden können. In weiteren Ausführungsbeispielen ist der elektrische Flächenkontakt 230 ein elektrisch leitfähiges Geflecht, welches sich den vorherrschenden dynamischen und statischen mechanischen Lasten auf die Rotorblattstruktur aufgrund der flexiblen Eigenschaften eines Geflechts anpassen kann. Das Geflecht ist in Form einer elektrisch leitenden Struktur oder in Form eines feinmaschigen Gitters ausgeführt, welches aus einzelnen elektrisch leitenden Materialfäden zu einer zusammengesetzten Struktur verbunden ist. Aufgrund der Zusammensetzung aus Materialfäden, kann das Geflecht entsprechend der Stromstärke und Spannung sowohl skaliert werden als auch geometrisch in Form eines engen oder großflächigen Geflechts ausgeführt werden. Dies hat den Vorteil, dass für verschiedene Hartlackstärken und Schichten als auch Stromstärken und Spannungen ein passendes Geflecht verwenden werden kann.

Der elektrische Flächenkontakt 230 besteht vorzugsweise aus Metall. Somit können die hohen elektrischen Ströme und die vorherrschenden Zug- und Druckbeanspruchungen an einer Oberfläche einer Rotorblattheizung in einem Rotorblatt 110 aufgrund der guten mechanischen und elektrischen Eigenschaften aufgenommen werden. Insbesondere wenn der elektrische Flächenkontakt 230 als Geflecht ausgeführt ist, kann eine Dehnspannung an einer Oberfläche problemlos von einem dehnbaren Metall oder einem Geflecht aufgenommen werden, wodurch besonders hohe elektrische Lasten und besonders hohe mechanische Kräfte vom Flächenkontakt 230 in Verbindung mit der elektrisch leitenden Beschichtung 220 aufgenommen werden können.

Bei weiteren Ausführungsbeispielen besteht der Flächenkontakt 230 aus Aluminium, um einen besonders leicht ausgeführten Flächenkontakt 230 zur elektrisch leitenden Beschichtung 220 zu ermöglichen.

Bei weiteren Ausführungsbeispielen besteht der Flächenkontakt 230 aus Kupfer, welches eine besonders gute elektrische Leitfähigkeit aufweist und welches sich somit vorteilhaft auf die Dimensionierung der elektrischen Leitfähigkeit des elektrischen Flächenkontakts 230 auswirkt. Des Weiteren können aufgrund der mechanischen Dehneigenschaften von Kupfer Vorteile bei der Verarbeitung und bei dem Anbringen des Flächenkontakts 230 auf eine Rotorblattoberfläche in einem Rotorblatt 110 an einer WEA entstehen.

In weiteren Ausführungsbeispielen des Flächenkontakts 230 wird die elektrisch leitende Beschichtung 220 mittels eines Kohlefasermaterials elektrisch kontaktiert. Das Kohlefasermaterial hat die Eigenschaften einer hohen elektrischen Leitfähigkeit und einer besonders leichten Struktur. Wenn der elektrische Flächenkontakt 230 aus Kohlefasermaterial ausgeführt wird, kann dieses Kohlefasermaterial auch Teilweise in den Hartlack 240 eingebunden werden und die Oberflächenfestigkeit erhöhen.

Die elektrisch leitfähige Beschichtung 220, ausgeführt als Rotorblattheizung, wird entsprechend der Fig. 2 auf den Hartlack 240 und auf den Flächenkontakt 230 auf einer Außenseite des Rotorblatts 110 aufgetragen. Weil der Flächenkontakt 230 sich in einem Graben im Hartlack 240 befindet und vor dem Beschichten in die Außenhaut des Rotorblattes 110 eingebracht wird, ist die elektrisch leitende Beschichtung 220 mit dem Flächenkontakt 230 elektrisch verbunden. Aufgrund der Kontaktfläche zwischen der Beschichtung 220 und dem Flächenkontakt 230 fließt der Strom bei einer angelegten Spannung über den Flächenkontakt 230 in die elektrisch leitende Beschichtung 220. Somit erfolgt die Kontaktierung nur durch das Auftragen der leitfähigen Beschichtung 220 auf den Flächenkontakt 230, oder auf das Drahtgeflecht, in einem ausreichend großen Bereich um eine flächige Kontaktierung zwischen dem Flächenkontakt 230 und der leitfähigen Beschichtung 220 sicherzustellen.

Um die Rotorblattheizung in Form einer elektrisch leitenden Beschichtung 220 elektrisch anzuschließen, werden mindestens zwei elektrische Leitungen in Form eines Flächenkontakts 230 benötigt um einen elektrischen Stromkreis zu schließen. Hierbei wird die elektrisch leitenden Beschichtung 220 zwischen den beiden Flächenkontakten 230 entsprechend eines elektrischen Widerstandes angeschlossen.

Ferner dient der elektrisch nicht leitfähige Hartlack 240 hierbei als nicht leitfähiges Trägermaterial um einen Leckstrom entlang des Rotorblattes 110 zu vermeiden. Unter Berücksichtigung von weiteren potenziellen Leckströmen in der Rotorblattheizung, ist auf elektrisch leitfähige Beschichtung 220 eine Deckschicht 210 aufgetragen. Zusätzlich zu der Funktion einer Reduzierung von etwaiger Leckströmen durch äußere Verunreinigungen der elektrisch leitfähige Beschichtung 220, wird durch die Decksicht 210 ein Schutz der Rotorblattheizung vor Witterungseinflüssen gewährleistet. Gemäß einigen Ausführungsbeispielen ist die Beschichtung auf einem elektrisch nicht leitenden Trägermaterial aufgetragen.

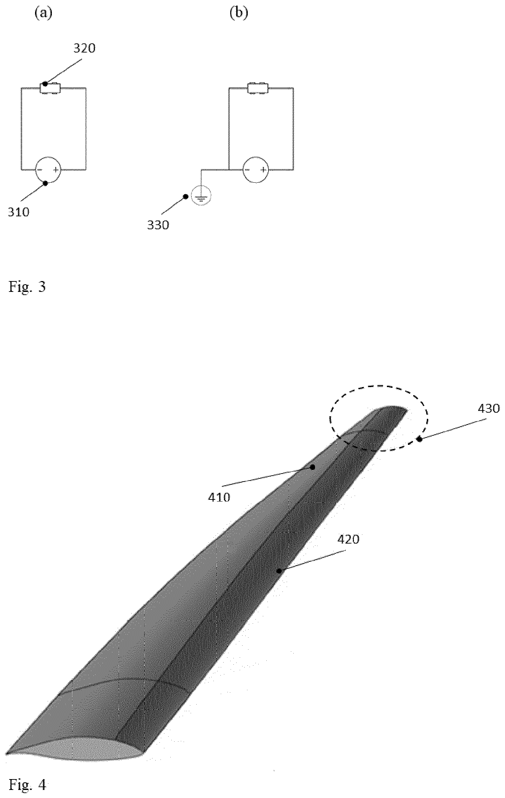

**Fig. 3** zeigt eine schematische Darstellung eines elektrischen Ersatzschaltbildes eines elektrischen Widerstandes 320 ausgeführt als Rotorblattheizung und angeschlossen an eine Stromquelle 310. Die Stromquelle 310 kann hierbei als Gleichstromquelle oder Wechselstromquelle ausgeführt werden, um einen für den Widerstand 320 der Rotorblattheizung benötigten elektrischen Strom zu liefern.

Fig. 3a zeigt anhand des elektrischen Ersatzschaltbildes die Reihenfolge der Kontaktierung der Stromquelle 310 mit dem elektrischen Widerstand 320 ausgeführt als Heizwiderstand einer Rotorblattheizung. Die elektrische leitfähige Beschichtung ist im elektrischen Ersatzschaltbild als Widerstand 320 ausgeführt und ist in Reihe an eine Stromquelle 310 angebunden. Hierbei dienen zwei Flächekontakte 230 als Stromleiter, um den Stromkreis der Rotorblattheizung zu schließen.

Fig. 3b zeigt ein elektrisches Ersatzschaltbild einer Kontaktierung der Stromquelle 310 mit dem Heizwiderstand 320 der Rotorblattheizung mit einem Anschluss an einen Potentialausgleich 330. Aufgrund der exponierten Lage von Rotorblättern in einer WEA besteht die Gefahr von Blitzeinschlägen. Insbesondere könnten Blitze in die leitfähige Beschichtung oder den Flächenkontakt 230 einschlagen und eine Überbelastung der Rotorblattheizung hervorrufen. Die Kontaktierung der Beschichtung der Ausführungsbeispiele der Erfindung kann in der Lage sein, Blitzströme zerstörungsfrei zu übertragen, um einen dauerhaften Betrieb der Rotorblattheizung sicherzustellen. Durch den Potentialausgleich 330 kann ein Blitzstrom zerstörungsfrei von der Rotorblattheizung und von der angebundenen Stromquelle 310 an eine Erdungseinrichtung abgeleitet werden.

**Fig. 4** zeigt eine schematische Darstellung einer der elektrisch leitenden Beschichtung 420 aufgetragen als Rotorblattheizung auf einer Außenseite eines Rotorblattes 410 an einer WEA.

Diese elektrisch leitfähige Beschichtung 420 ist auf der Vorderkante des Rotorblatts 410 aufgetragen. Aufgrund der rotierenden Bewegung des Rotorblattes 110 ist die Vorderkante des Rotorblatts 410 besonders anfällig für eine Eisbildung an der Oberfläche. Aus diesem Grund erstreckt sich die elektrisch leitfähige Beschichtung 420 ausgeführt als Rotorblattheizung an der Vorderseite von einer Saugseite über die Vorderkante bis hin zu einer Druckseite des Rotorblattes 110. Weil der Flächenkontakt in einem Graben im Hartlack 240 bündig mit der Oberfläche des Rotorblatts abschließt, ist die hier ausgeführte Rotorblattheizung bauartbedingt besonders flach auf der Oberfläche angebracht und kontaktiert.

In weiteren Ausführungsbeispielen kann die elektrisch leitfähigen Beschichtung 420 ausgeführt als Rotorblattheizung auf mindestens 15 % der Oberfläche eines 410 Rotorblattes aufgetragen werden. Im Falle einer Rotorblattheizung mit einem Auftrag zwischen 15 % und 50 % kann von einer kleinen Auslegung der Heizleistung ausgegangen werden. Weiterhin ist er möglich, die elektrisch leitfähigen Beschichtung 420 auf fast der gesamten Oberfläche von bis zu 90 % des Rotorblattes 410 aufzutragen. Entsprechend einer großflächigen Beschichtung zwischen 50% und 90 % kann von einer wirkungsvollen Rotorblattheizung mit entsprechend hohem Stromeintrag ausgegangen werden. Gemäß einigen Ausführungsbeispielen sind mindestens 5% der Oberfläche eines Rotorblatts (410) von der Beschichtung bedeckt.

In weiteren Ausführungsbeispielen wird die elektrisch leitfähigen Beschichtung 420, ausgeführt als Rotorblattheizung, an der Spitze des Rotorblattes 410 ausgeführt. Weil die laterale Ausdehnung des Rotorblattes mit dem energieertrag der WEA korreliert, sollte insbesondere im Bereich der Rotorblattspitze 430 eine Eisbildung vermieden werden. Hierbei kann die elektrisch leitfähige Beschichtung 420 nur in einem Bereich der Rotorblattspitze 430 aufgetragen werden, welche das Rotorblatt 410 zwischen 15 % und 30 % der Gesamtoberfläche bedeckt. Entsprechend der nur auf der Rotorblattspitze 430 aufgetragenen elektrisch leitfähigen Beschichtung 420 ist von einer minimalen Rotorblattheizung mit einem entsprechend kleinen Wärmeeintrag auszugehen. In weiteren Ausführungsbespielen kann sich die elektrisch leitfähige Beschichtung 420 über die gesamte laterale Ausdehnung des Rotorblattes 410 erstrecken. Hierbei kann sich die Beschichtung über 30 % bis 90 % der Gesamtoberfläche des Rotorblattes 410 erstrecken. Bei einer großflächigen Rotorblattheizung von bis zu 90 % der Gesamtoberfläche des Rotorblattes 410 kann bei einem entsprechenden Wärmeeintrag von einem eisfreien Rotorblatt 410 ausgegangen werden.

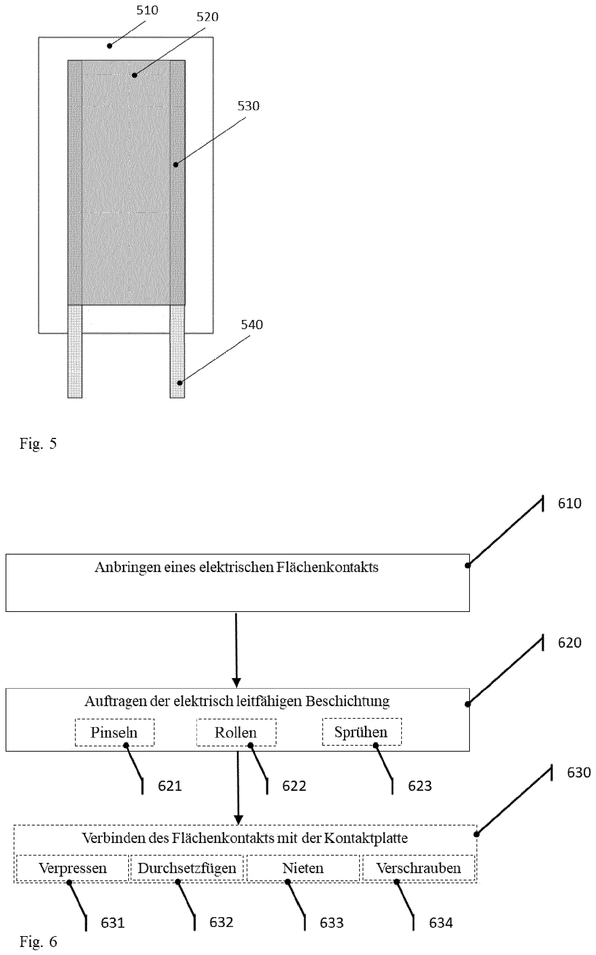

**Fig. 5** zeigt eine schematische Darstellung einer Rotorblattoberfläche 510 und einer elektrisch leitfähigen Beschichtung 520 aufgetragen auf einen elektrischen Flächenkontakt ausgeführt als elektrisch leitfähiges Geflecht 530. Die Rotorblattheizung als elektrische leitfähige Beschichtung 520 ist auf die Rotorblattoberfläche 510 an einer Außenschale eines Rotorblatts 110 aufgetragen. Die auf dem Rotorblatt 110 aufgetragene Beschichtung 520 überdeckt hierbei mindestens 15 % das leitfähige Geflechts 530, wodurch hohe lokale Stromdichten vermieden werden. Des Weiteren ist es möglich, dass die auf dem Rotorblatt 110 aufgetragene Beschichtung 520 bis zu 80% des leitfähigen Geflechts 530 überdeckt, um einen besonders leistungsstarken Flächenkontakt 230 zu ermöglichen. In einigen Ausführungsbeispielen wird die Beschichtung derart aufgetragen, dass mindestens 2% der Beschichtung eine direkte, elektrische Verbindung zum Flächenkontakt aufweist. In einigen Ausführungsbeispielen wird die Beschichtung auf den elektrischen Flächenkontakt auf der Außenseite des Rotorblatts angebracht.

In weiteren Ausführungsbeispielen kann der Flächenkontakt 530 in Form eines Geflechts mit einer Kontaktplatte (nicht gezeigt) an eine Stromquelle 310 angeschlossen werden. Hierbei ist die Kontaktplatte ausgebildet einen elektrischen Strom von der Stromquelle 310 an das Geflecht zu leiten. Ferner ist die Kontaktplatte ein elektrischer Leiter und kann das Profil und/oder eine Kerbung entsprechend des Aeroprofils annehmen und an einer Außenseite des Rotorblatts 110 befestigt werden. Durch die Verbindung des als Geflecht ausgeführten Flächenkontakts 530 mit einer Kontaktplatte ist eine durchgehende und dauerfeste elektrische Kontaktierung des elektrischen Anschlusses 540 zur Stromquelle 310 möglich. Der Flächenkontakt 530 könnte somit leistungsstark an einer Rotorblattwurzel an eine Stromquelle angeschlossen werden. In einigen Ausführungsbeispielen wird das Anbringen des Flächenkontakts an der Platte auf einer Oberfläche des Rotorblatts ausgeführt.

**Fig. 6** zeigt ein Fließdiagramm eines Verfahrens zum Anbringen eines elektrischen Flächenkontakts 610 an dem Rotorblatt und zum Auftragen der elektrisch leitfähigen Beschichtung 620 auf den elektrischen Flächenkontakt an einem Rotorblatt.

Der elektrische Flächenkontakt 610 wird entsprechend der Fig. 2 an der Oberfläche in einem Graben im Hartlack 240 bündig mit der Oberfläche des Rotorblatts angebracht. Nach dem Anbringen 610 des elektrischen Flächenkontakts 230 an einer Außenseite des Rotorblatts 110 kann die elektrisch leitfähige Beschichtung 220 auf den elektrischen Flächenkontakt und den Hartlack 640 aufgetragen 630 werden. Sofern die leitfähige Beschichtung 220 lackähnliche Eigenschaften aufweist, können zum Beispiel die Methoden Pinseln 621, Rollen 622 oder Sprühen 623 verwendet werden. Insbesondere bei einem flächendeckenden Auftragen der elektrisch leitfähigen Beschichtung können die Auftragungsmethoden des Rollens 622 oder des Sprühens 623 homogen ausgeführt werden.

Optional ist es möglich den als Geflecht ausgeführten Flächenkontakt 230 mit jeweils zwei Kontaktplatten zur elektrischen Kontaktierung mit einer Stromquelle 310 verpresst 631 (englisch: clinchen), durchsetzgefügt 632, vernietet 633 oder verschraubt 634 zu verbinden. Durch die kalt ausgeführten Verbindungsformen wird in diesem Ausführungsbeispiel ein flexibler Einsatz von materialen gefördert, wodurch unterschiedlichen Materialen kombiniert werden können (zum Beispiel Carbonfasern und Aluminium Kontaktplatten).

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung bzw. eines Gegenstandes beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist, der zu dem entsprechenden Gegenstand führt. Analog dazu stellen Aspekte, die im Zusammenhang mit einem oder als ein Verfahrensschritt beschrieben wurden, auch eine Beschreibung eines entsprechenden Blocks Merkmals eines mittels des Verfahrens hergestellten Gegenstandes dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Rotorblatt (110) für eine Windenergieanlage, umfassend:
eine elektrisch leitfähige Beschichtung (220); und
einen mit der Beschichtung leitfähig verbundenen elektrischen Flächenkontakt (230), der ausgebildet ist, einen elektrischen Strom an die Beschichtung zu leiten,
wobei der elektrische Flächenkontakt (230) ein elektrisch leitfähiges Geflecht umfasst, **dadurch gekennzeichnet, dass** die Beschichtung (220) einen leitfähigen Lack umfasst.

2. Das Rotorblatt nach Anspruch 1, wobei das elektrisch leitfähige Geflecht in ein Material (240) der Beschichtung eingebettet ist.

3. Das Rotorblatt nach einem der vorherigen Ansprüche, wobei der elektrische Flächenkontakt (230) aus Metall besteht.

4. Das Rotorblatt nach einem der vorherigen Ansprüche, wobei der elektrische Flächenkontakt (230) aus Aluminium oder Kupfer besteht.

5. Das Rotorblatt nach einem der vorherigen Ansprüche, wobei der elektrische Flächenkontakt (230) aus Kohlefasermaterial besteht.

6. Das Rotorblatt nach einem der vorherigen Ansprüche, wobei der elektrische Flächenkontakt (230) an eine Erdungseinrichtung (330) angebunden ist.

7. Das Rotorblatt nach einem der vorherigen Ansprüche, wobei die Beschichtung (220) auf mindestens einer Vorderkante (420) des Rotorblatts angebracht ist.

8. Das Rotorblatt nach einem der vorherigen Ansprüche, wobei die Beschichtung (220) einen Schichtwiderstand zwischen 10 und 2000 Ohm/cm aufweist.

9. Das Rotorblatt nach einem der vorherigen Ansprüche, wobei die Beschichtung (220) derart dimensioniert ist, dass Sie einen Strom zwischen 2 und 125 Ampere leiten kann.

10. Das Rotorblatt nach einem der vorhergehenden Ansprüche, ferner umfassend:
eine mit dem elektrisch leitfähigen Geflecht leitfähig verbundene Platte eines metallischen Leiters zum Anschluss einer Stromquelle (310) an das leitfähige Geflecht.

11. Ein Verfahren zum Anbringen einer elektrisch leitfähigen Beschichtung (220) auf ein Rotorblatt einer Windenergieanlage, umfassend:
Anbringen eines elektrischen Flächenkontakts (610) an dem Rotorblatt, wobei der elektrische Flächenkontakt (230) ein elektrisch leitfähiges Geflecht umfasst; und
Auftragen der elektrisch leitfähigen Beschichtung (220) auf den elektrischen Flächenkontakt (230) und das Rotorblatt (110), wobei die Beschichtung (220) einen leitfähigen Lack umfasst.

12. Das Verfahren nach Anspruch 11, wobei das Auftragen der elektrisch leitfähigen Beschichtung (220) ein Auftragen eines leitfähigen Lackes auf den elektrischen Flächenkontakt, insbesondere mittels eines Pinsels (621), einer Rolle (622) oder eines Sprühverfahrens (623) umfasst.

13. Das Verfahren nach Anspruch 11 oder 12, wobei der elektrische Flächenkontakt (230) ein elektrisch leitfähiges Geflecht umfasst und die Beschichtung derart aufgetragen wird, dass diese das Geflecht einbettet.

14. Windenergieanlage mit zumindest einem Rotorblatt gemäß einem der Ansprüche 1 bis 10.

## Claims

1. A rotor blade (110) for a wind turbine, comprising:
an electrically conductive coating (220); and
an electrical surface contact (230) conductively connected to the coating and configured to conduct an electrical current to the coating,
wherein the electrical surface contact (230) comprises an electrically conductive braid, **characterized in that** the coating (220) comprises a conductive paint.

2. The rotor blade of claim 1, wherein the electrically conductive braid is embedded in a material (240) of the coating.

3. The rotor blade of any one of the previous claims, wherein the electrical surface contact (230) is made of metal.

4. The rotor blade of any one of the previous claims, wherein the electrical surface contact (230) is made of aluminum or copper.

5. The rotor blade of any one of the previous claims, wherein the electrical surface contact (230) is made of carbon fiber material.

6. The rotor blade of any one of the previous claims, wherein the electrical surface contact (230) is connected to a grounding device (330).

7. The rotor blade of any one of the previous claims, wherein the coating (220) is applied to at least one leading edge (420) of the rotor blade.

8. The rotor blade of any one of the previous claims, wherein the coating (220) has a sheet resistance between 10 and 2000 ohms/cm.

9. The rotor blade of any one of the previous claims, wherein the coating (220) is dimensioned such that it may conduct a current between 2 and 125 amperes.

10. The rotor blade of any one of the previous claims, further comprising:
a plate of a metallic conductor conductively connected to the electrically conductive braid for connecting a power source (310) to the conductive braid.

11. A method of applying an electrically conductive coating (220) to a rotor blade of a wind turbine, comprising:
attaching an electrical surface contact (610) to the rotor blade, the electrical surface contact (230) comprising an electrically conductive braid; and
applying the electrically conductive coating (220) to the electrical surface contact (230) and the rotor blade (110), wherein the coating (220) comprises a conductive paint.

12. The method of claim 11, wherein applying the electrically conductive coating (220) comprises applying a conductive paint to the electrical surface contact, in particular by means of a brush (621), a roller (622) or a spraying method (623).

13. The method of claim 11 or 12, wherein the electrical surface contact (230) comprises an electrically conductive braid and the coating is applied such that it embeds the braid.

14. A wind turbine having at least one rotor blade according to any one of claims 1 to 10.

## Revendications

1. Pale de rotor (110) pour une éolienne, comprenant :
un revêtement électroconducteur (220) ; et
un contact électrique de surface (230) connecté de manière conductrice au revêtement, qui est configuré pour conduire un courant électrique vers le revêtement,
dans lequel le contact électrique de surface (230) comprend une tresse électroconductrice, **caractérisé en ce que** le revêtement (220) comprend un vernis conducteur.

2. Pale de rotor selon la revendication 1, dans laquelle la tresse électroconductrice est noyée dans un matériau (240) du revêtement.

3. Pale de rotor selon l'une des revendications précédentes, dans lequel le contact électrique de surface (230) est en métal.

4. Pale de rotor selon l'une des revendications précédentes, dans lequel le contact électrique de surface (230) est en aluminium ou en cuivre.

5. Pale de rotor selon l'une des revendications précédentes, dans lequel le contact électrique de surface (230) est composé de matériau en fibres de carbone.

6. Pale de rotor selon l'une des revendications précédentes, dans lequel le contact électrique de surface (230) est relié à un dispositif de mise à la terre (330).

7. Pale de rotor selon l'une des revendications précédentes, dans lequel le revêtement (220) est appliqué sur au moins un bord d'attaque (420) de la pale de rotor.

8. Pale de rotor selon l'une des revendications précédentes, dans lequel le revêtement (220) présente une résistance de couche comprise entre 10 et 2000 ohms/cm.

9. Pale de rotor selon l'une des revendications précédentes, dans lequel le revêtement (220) est dimensionné pour conduire un courant compris entre 2 et 125 ampères.

10. Pale de rotor selon l'une des revendications précédentes, comprenant en outre :
une plaque d'un conducteur métallique connectée de manière conductrice à la tresse électroconductrice pour connecter une source de courant (310) à la tresse conductrice.

11. Procédé d'application d'un revêtement électroconducteur (220) sur une pale de rotor d'une éolienne, comprenant le fait de :
appliquer un contact électrique de surface (610) sur la pale de rotor, le contact électrique de surface (230) comprenant une tresse électroconductrice ; et
appliquer le revêtement électroconducteur (220) sur le contact électrique de surface (230) et la pale de rotor (110), le revêtement (220) comprenant un vernis conducteur.

12. Le procédé selon la revendication 11, dans lequel le fait d'appliquer le revêtement électroconducteur (220) comprend le fait d'appliquer un vernis conducteur sur le contact électrique de surface, en particulier au moyen d'un pinceau (621), d'un rouleau (622) ou d'un procédé de pulvérisation (623).

13. Procédé selon la revendication 11 ou 12, dans lequel le contact électrique de surface (230) comprend une tresse électroconductrice et le revêtement est appliqué de telle sorte qu'il noie la tresse.

14. Eolienne comprenant au moins une pale de rotor selon l'une des revendications 1 à 10.
